# EUROPÄISCHE PATENTSCHRIFT

(11) **EP 1 532 041 B1**
(45) Veröffentlichungstag und Bekanntmachung des Hinweises auf die Patenterteilung: **07.12.2005**
(21) Anmeldenummer: 03794852.8
(22) Anmeldetag: 08.08.2003
(51) Int. Cl.: B62D 65/04, B62D 25/06

(54) **KRAFTWAGEN-KAROSSERIE MIT EINER TRAGSTRUKTUR AUS GROSSFORMATIGEN TEILMODULEN**
MOTOR VEHICLE BODY COMPRISING A SUPPORT STRUCTURE MADE OF LARGE-SIZE PARTIAL MODULES
CARROSSERIE DE VOITURE STRUCTURE PORTANTE COMPOSEE DE MODULES DE GRANDES DIMENSIONS

(30) Priorität: 27.08.2002 DE 10239990
(43) Veröffentlichungstag der Anmeldung: 25.05.2005
(73) Patentinhaber: DaimlerChrysler AG, 70567 Stuttgart (DE)
(72) Erfinder: EIPPER, Konrad, 72108 Rottenburg (DE); FUSSNEGGER, Wolfgang, 72074 Tübingen (DE); MAYER, Christian, 71212 Renningen/Malmsheim (DE); SPIES, Bernhard, 71063 Sindelfingen (DE); VALDIVIESO, Carlos, 71701 Schwieberdingen (DE)
(86) Internationale Anmeldenummer: PCT/EP2003/008815
(87) Internationale Veröffentlichungsnummer: WO 2004/024544

(56) Entgegenhaltungen:
- EP-A- 0 250 678
- EP-A- 0 622 289
- DE-A- 3 720 344
- DE-A- 19 833 395
- US-A- 4 634 174

## Beschreibung

Die Erfindung betrifft eine Karosserie für einen Kraftwagen der im Oberbegriff des Patentanspruchs 1 angegebenen Art.

Eine derartige Karosserie für einen Kraftwagen ist bereits in der DE 37 20 344 A1 beschrieben und umfasst eine Tragstruktur aus großformatigen Teilmodulen. Ein Dachmodul der Tragstruktur ist auf Höhe der Bordwandkante über vordere und hintere Dachsäulen auf ein Grundmodul aufgesetzt, wobei die vorderen und hinteren Dachsäulen über einen jeweils zugeordneten Querträger miteinander verbunden sind. Dabei sind die hinteren Dachsäulen über eine Hutablage miteinander verbunden, welche durch den zugeordneten Querträger versteift ist.

Aus der EP 0 250 678 B1 ist bereits eine solche Karosserie als bekannt zu entnehmen, welche eine aus großformatigen Teilmodulen zusammengesetzte Tragstruktur umfasst. Eines der Teilmodule ist ein Dachmodul, welches mit vorderen und hinteren Dachsäulen etwa auf Höhe der Bordwandkante der Karosserie auf ein Grundmodul aufgesetzt ist. Die vorderen und hinteren Dachsäulen sind dabei zur Versteifung des Dachmoduls über einen jeweils zugeordneten Querträger miteinander verbunden.

Aufgabe der Erfindung ist die Schaffung einer Karosserie mit einer Tragstruktur, welche im Bereich der Einleitung von Fahrwerkskräften von der Hinterachse sehr steif ausgebildet ist.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei der Tragstruktur der erfindungsgemäßen Karosserie sind die hinteren Dachsäulen über eine Tragplatte einer Hutablage miteinander verbunden, wodurch sich zunächst eine verbesserte Aussteifung der hinteren Dachsäulen des Dachmoduls bzw. der gesamten zusammengesetzten Tragstruktur ergibt. Dabei ist der zumindest eine Querträger in die Tragplatte integriert, wodurch ein insgesamt äußerst steifer Verbund am hinteren Ende des Dachmoduls geschaffen ist. Durch die Anordnung der Tragplatte an dem Dachmodul kann bei der darunter angeordneten Struktur des Grundmoduls auf querversteifende Elemente an deren oberem Ende verzichtet werden. Mit anderen Worten brauchen somit die an die hinteren Dachsäulen anschließenden Wandbereiche der hinteren Seitenwände des Grundmoduls nicht an deren oberen Enden - beispielsweise über einen Querträger - verbunden werden, so dass zwischen den besagten Wandbereichen ein Freiraum geschaffen ist. Hierdurch ist das Grundmodul beispielsweise geeignet zur Verwendung für einen offenen Kraftwagen, bei dem der Freiraum zwischen den besagten Wandbereichen für einen Verdeckkasten benötigt wird.

Durch die sich in Fahrzeugquerrichtung erstreckende Trägeranordnung, welche durch die Tragplatte des Dachmoduls zu einem Tragrahmen geschlossen ist, kann der hintere Bereich der Tragstruktur, in welchen Fahrwerkskräfte von der Hinterachse eingeleitet werden, sehr steif ausgebildet werden. Die Fahrwerkskräfte können dabei besonders gut in den Tragrahmen bzw. die Tragstruktur eingeleitet werden, da in Fahrzeughochrichtung verlaufende Träger vorgesehen sind, welche über einen Querträger auf Höhe eines Wagenbodens miteinander verbunden und auf der Innenseite von hinteren Radhäusern angeordnet sind.

Weitere Vorteile, Merkmale und Einzelheiten der Erfindung ergeben sich aus der nachfolgenden Beschreibung eines bevorzugten Ausführungsbeispieles sowie anhand der Zeichnungen; diese zeigen in
- Fig.1: eine perspektivische Explosionsdarstellung auf die aus großformatigen Teilmodulen zusammengesetzte Tragstruktur der erfindungsgemäßen Kraftwagenkarosserie;
- Fig.2: eine weitere perspektivische Explosionsdarstellung auf die aus Teilmodulen zusammengesetzte Tragstruktur, welche mit Außenbeplankungsteilen verkleidet ist;
- Fig.3: eine Perspektivansicht auf das Dachmodul der Tragstruktur; und in
- Fig.4: eine Perspektivansicht auf das Grundmodul der Tragstruktur.

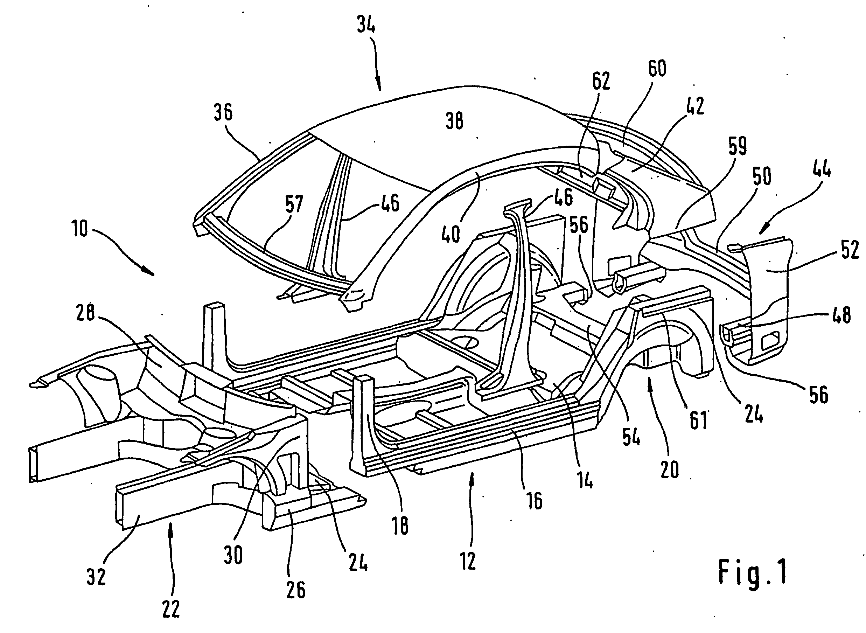

In Fig.1 ist in perspektivischer Explosionsdarstellung eine Tragstruktur 10 einer Kraftwagenkarosserie gezeigt, die aus mehreren großformatigen, im weiteren noch näher beschriebenen Teilmodulen zusammengesetzt ist. Die Teilmodule der Tragstruktur 10 sind in dem hier gezeigten Ausführungsbeispiel jeweils aus einer Mehrzahl von zusammengefügten Blechteilen hergestellt; gleichfalls können die Teilmodule jedoch auch in anderen Bauweisen, beispielsweise als sog. Space-frame, als Kunststoffteile, Metallgussteile, als Bauteile in sog. Sandwich-Bauweise oder dgl. vorgefertigt sein. Insbesondere sind dabei auch Kombinationen unterschiedlicher Bauweisen für die zusammengefügten Teilmodule je nach Anwendung und Belastung denkbar. Die einzelnen Module sind insbesondere über Klebverbindungen, Schweißverbindungen oder dgl. zusammengefügt. Gleichfalls sind andere gängig Verbindungen wie Schraubverbindungen oder dgl. denkbar.

Ein Grundmodul 12 der Tragstruktur 10 umfasst im wesentlichen einen Karosserieboden 14, der seitlich von Längsträgern 16 begrenzt ist. Nach vorne reicht das Grundmodul 12 bis an Säulenabschnitte 18 von Vorderwandsäulen, welche von den jeweils zugeordneten vorderen Enden der seitlichen Längsträger 16 nach oben abragen. Der Karosserieboden 14 des Grundmoduls 12 endet in einem erheblichen Abstand hinter dem vorderen Ende des Grundmoduls 12 bzw. hinter den Säulenabschnitten 18 der Vorderwandsäulen. Hinten endet das Grundmodul 12 hinter hinteren Radhäusern 20, oberhalb denen Wandbereiche 24 der jeweiligen hinteren Seitenwand angeordnet sind. Das Grundmodul 12 wird bereits vor dem Zusammenfügen mit den anderen Teilmodulen so weit als möglich ausgestattet.

Mit dem Grundmodul 12 ist ein Vorbaumodul 22 verbunden, das einen vorderen Endbereich 24 des Karosseriebodens 14 umfasst und sich zwischen seitlichen Längsträgerabschnitten 26 des Vorbaumoduls 22 erstreckt. Nach vorne endet der vordere Endbereich 24 des Karosseriebodens 14 an einer vorderen Stirnwand 28, welche sich bis etwa auf Höhe der Bordwandkante erstreckt und seitlich von Säulenabschnitten 30 der Vorderwandsäulen begrenzt ist. Am vorderen Ende des Vorbaumoduls 22 sind vordere Längsträger 32 erkennbar.

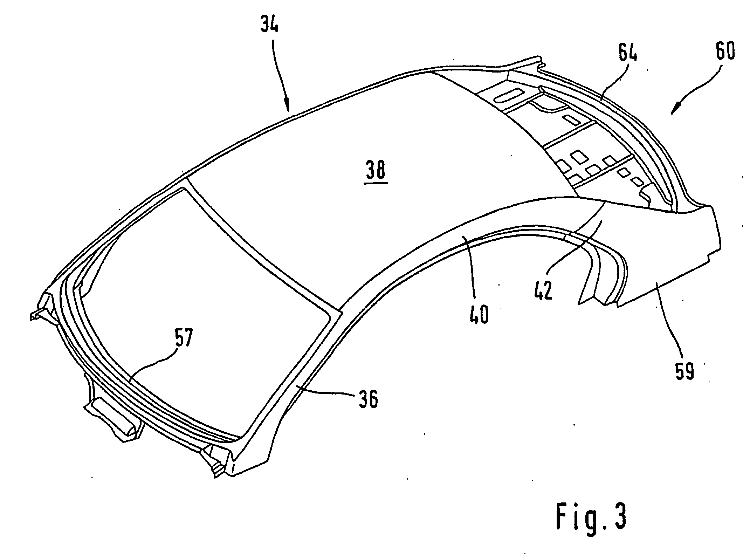

Auf das Grundmodul 12 und das Vorbaumodul 22 ist ein in Zusammenschau mit Fig.3 erkennbares Dachmodul 34 aufsetzbar, welches hier seitliche A-Säulen 36, im Bereich des Dachs 38 seitliche Dachholme 40, und C-Säulen 42 umfasst. Die A-Säulen 36 stützen sich bei zusammengesetzter Tragstruktur 10 am Grundmodul 12 und am Vorbaumodul 22 ab.

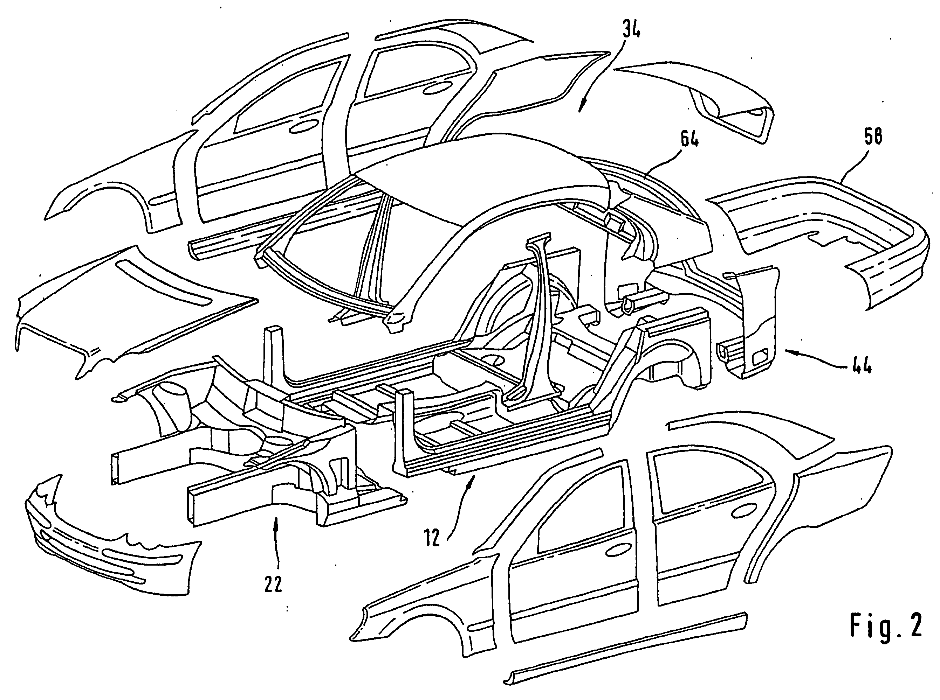

Hinten schließt sich an das Grundmodul 12 ein Heckmodul 44 an, welches bei zusammengesetzter Tragstruktur 10 zusammen mit dem hinteren Endbereich des Grundmoduls 12 zur hinteren Knautschzone des Kraftwagens gehört und einen Kofferraum nach hinten begrenzt. Im wesentlichen umfasst das Heckmodul 44 seitliche hintere Längsträgerabschnitte 48, einen die Längsträgerabschnitte 48 verbindenden hinteren Querträger 50 sowie hintere Seitenwandbereiche 52. Durch einen im weiteren noch erläuterten Querträger 54 und die Längsträger 16 des Grundmoduls 12 sowie durch die Längsträgerabschnitte 48 und den hinteren Querträger 50 des Heckmoduls 44 ist bei zusammengesetzter Tragstruktur ein eine nicht gezeigte Reserveradmulde umgebender Rahmen gebildet. Es ist ersichtlich, dass das Heckmodul 44 entlang einer jeweils vertikal verlaufenden Fahrzeugquerebene mit dem Grundmodul 12 und dem Dachmodul 34 verbunden ist. Die Befestigung des Heckmoduls 44 an dem Grundmodul 12 und dem Dachmodul 34 erfolgt über Flansche 56 an den Längsträgern 16 bzw. den zugeordneten Längsträgerabschnitten 48, sowie über weitere nicht gezeigte Fügestellen zwischen den Modulen 12,34 und 44. Nach hinten schließt sich an das Heckmodul 44 ein Heckendmodul mit einem Stoßfänger 58 an, welcher in Fig.2 erkennbar ist.

Zwischen dem das Dach 38 seitlich begrenzenden Dachholm 40 des Dachmoduls 34 und dem seitlichen Längsträger 16 des Grundmoduls 12 erstreckt sich jeweils eine B-Säule 46, welche als separates Bauteil ausgebildet und beim Zusammensetzen der Teilmodule 12,22,34,44 am Dachholm 40 bzw. am seitlichen Längsträger 16 festzulegen ist.

In Fig.2 ist in einer weiteren perspektivischen Explosionsdarstellung die aus den Teilmodulen 12,22,34,44 zusammengesetzte Tragstruktur 10 dargestellt, welche mit Außenbeplankungsteilen im Bereich der vorderen und hinteren Kotflügel sowie des Schwellers aus Kunststoff, Blech oder dgl. verkleidet ist.

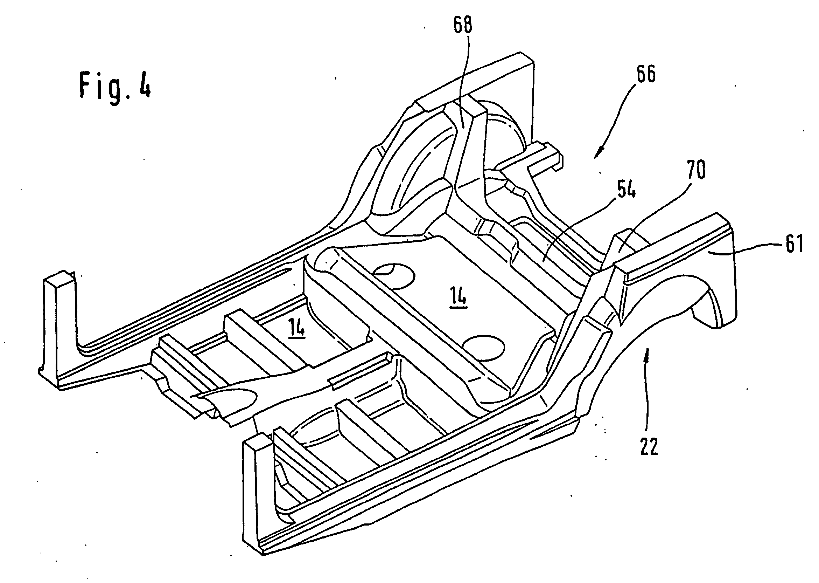

In Zusammenschau von Fig.1 mit den jeweils in Perspektivansicht das Dachmodul 34 und das Grundmodul 12 zeigenden Figuren 3 und 4 ist ersichtlich, dass sich die unteren Enden 59 der C-Säulen 42 am jeweils zugeordneten oberen Ende 61 der Wandbereiche 24 abstützen, wobei die Module 12,34 beispielsweise mittels einer Klebeverbindung entlang von Fügeflächen miteinander verbunden sind. Die Fügeflächen und somit die Unterteilung der beiden Module 12,34 verlaufen etwa auf Höhe der Bordwandkante der Karosserie. Es ist ersichtlich, dass die unteren Enden 59 der C-Säulen 42 bereits einen oberen Abschnitt der hinteren Seitenwand 24 bilden.

Die A-Säulen 36 des Dachmoduls 34 sind über einen Querträger 57 miteinander verbunden, welcher die Stirnwand 28 nach oben hin begrenzt. Die hier als C-Säulen 42 ausgebildeten hinteren Dachsäulen 42 sind über eine Tragplatte 60 einer Hutablage miteinander verbunden, welche hier zumindest annähernd in horizontaler Richtung verläuft. Die Tragplatte 60 ist durch einen vorderen und hinteren Querträger 62,64 nach vorne und hinten begrenzt bzw. durch diese versteift. Dabei verläuft die Tragplatte 60 an den unteren Enden 59 der C-Säulen 42 des Dachmoduls 34 etwa auf Höhe der Bordwandkante, wobei die unteren Enden 59 der C-Säulen 42 bereits den Seitenwandabschnitten 24 zuzuordnen sind. Außerdem ist in Fig.3 ersichtlich, dass das Dachmodul 34 unmittelbar hinter der Tragplatte 60 entlang der vertikalen Trennebene endet, an welcher das Heckmodul 44 an das Dachmodul 12 anschließt. An dem vorderen Querträger 62 (Fig.1) kann eine nicht gezeigte Hecktrennwand angeordnet sein, welche oberseitig durch den Querträger 62 begrenzt ist. Der hintere Querträger 64 ist als untere Begrenzung zur Aufnahme der Heckscheibe ausgebildet.

Aus Fig.4 ist ersichtlich, dass das Grundmodul 12 eine sich in Fahrzeugquerrichtung erstreckende Trägeranordnung 66 mit dem auf Höhe des Wagenbodens 14 verlaufenden Querträger 54 sowie zwei in Fahrzeughochrichtung auf der Innenseite der hinteren Radhäuser 20 angeordneten Trägern 68,70 aufweist. Durch die Tragplatte 60 des Dachmoduls 34 ist diese Trägeranordnung 66 zu einem sehr steifen Tragrahmen geschlossen, so dass von der Hinterachse eingeleitete Fahrwerkskräfte sehr gut von dem Tragrahmen aufgenommen werden können. In dem hier gezeigten Ausführungsbeispiel ist der vordere Querträger 62 der Tragplatte 60 genau in Erstreckungsrichtung mit den in Fahrzeughochrichtung verlaufenden Träger 68,70 angeordnet und direkt mit diesen verbunden.

## Patentansprüche

1. Karosserie für einen Kraftwagen, mit einer aus großformatigen Teilmodulen (12,22,34,44) zusammengesetzten Tragstruktur (10), wobei ein Dachmodul (34) mit vorderen und hinteren Dachsäulen (36,42) etwa auf Höhe der Bordwandkante der Karosserie auf ein Grundmodul (12) aufgesetzt ist, wobei die vorderen und hinteren Dachsäulen (36,42) des Dachmoduls (34) über einen jeweils zugeordneten Querträger (57;62,64) miteinander verbunden sind, und wobei die hinteren Dachsäulen (42) über eine Tragplatte (60) einer Hutablage miteinander verbunden sind, welche durch den zugeordneten Querträger (62,64) versteift ist,
**dadurch gekennzeichnet,**
**dass** das Grundmodul (12) eine sich in Fahrzeugquerrichtung erstreckende Trägeranordnung (66) umfasst, welche durch die Tragplatte (60) des Dachmoduls (34) zu einem Tragrahmen geschlossen ist, wobei die Trägeranordnung (66) in Fahrzeughochrichtung verlaufende Träger (68,70) aufweist, welche über einen sich auf Höhe eines Wagenbodens (14) erstreckenden Querträger (54) miteinander verbunden sind.

2. Karosserie nach Anspruch 1,
**dadurch gekennzeichnet,**
**dass** die Tragplatte (60) am vorderen und hinteren Ende durch jeweils einen Querträger (62,64) begrenzt ist.

3. Karosserie nach Anspruch 1,
**dadurch gekennzeichnet,**
**dass** die in Fahrzeughochrichtung verlaufenden Träger (68,70) der Trägeranordnung (66) auf der Innenseite von hinteren Radhäusern (20) angeordnet sind.

4. Karosserie nach Anspruch 1,
**dadurch gekennzeichnet,**
**dass** die in Fahrzeughochrichtung verlaufenden Träger (68,70) direkt mit dem vorderen Querträger (62) der Tragplatte (60) verbunden sind.

5. Karosserie nach Anspruch 1,
**dadurch gekennzeichnet,**
**dass** die Tragplatte (60) am unteren Ende (59) der Dachsäulen (42) zwischen oberen Seitenwandabschnitten des Dachmoduls (34) angeordnet sind.

6. Karosserie nach Anspruch 1,
**dadurch gekennzeichnet,**
**dass** das Dachmodul (34) unmittelbar hinter der Tragplatte (60) entlang einer vertikalen Trennebene endet, wobei sich an das Dachmodul (34) ein Heckmodul (44) anschließt.

## Claims

1. Body for a motor vehicle, with a supporting structure (10) made up of large submodules (12, 22, 34, 44), wherein a roof module (34) with front and rear roof posts (36, 42) is mounted on a base module (12) approximately at the level of the side edge of the body, wherein the front and rear roof posts (36, 42) of the roof module (34) are joined to one another by associated crossmembers (57; 62, 64) and wherein the rear roof posts (42) are joined to one another by a base plate (60) of a rear shelf reinforced by the associated crossmember (62, 64),
**characterised in that**
the base module (12) includes a structural member arrangement (66) extending in the transverse direction of the vehicle, which is completed by the base plate (60) of the roof module (34) to form a supporting frame, the structural member arrangement (66) comprising members (68, 70) extending in the vertical direction of the vehicle and joined to one another by a crossmember (54) extending at the level of a vehicle floor (14).

2. Body according to claim 1,
**characterised in that**
the base plate (60) is bounded by a crossmember (62, 64) each at the front and rear ends.

3. Body according to claim 1,
**characterised in that**
the members (68, 70) of the structural member arrangement (66) which extend in the vertical direction of the vehicle are located on the inside of inner wheel housings (20).

4. Body according to claim 1,
**characterised in that**
the members (68, 70) extending in the vertical direction of the vehicle are directly joined to the front crossmember (62) of the base plate (60).

5. Body according to claim 1,
**characterised in that**
the base plate (60) is located at the lower end (69) of the roof posts (42) between upper side wall sections of the roof module (34).

6. Body according to claim 1,
**characterised in that**
the roof module (34) terminates immediately behind the base plate (60) along a vertical split plane, the roof module (34) being adjoined by a rear module (44).

## Revendications

1. Carrosserie pour une voiture, avec une structure portante (10) composée de modules partiels (12, 22, 34, 44) de grand format, un module de toit (34) étant posé avec des montants de toit (36, 42) avant et arrière à peu près à la hauteur de l'arête de ridelle de la carrosserie sur un module de base (12), les montants de toit (36, 42) avant et arrière du module de toit (34) étant reliés entre eux au moyen d'une traverse (57 ; 62, 64) respectivement attribuée, et les montants de toit (42) arrière étant reliés entre eux au moyen d'une plaque portante (60) d'une plage arrière, qui est renforcée par la traverse (62, 64) attribuée, **caractérisée en ce que**, le module de base (12) comprend un dispositif support (66) s'étendant dans le sens transversal du véhicule, qui est fermé par la plaque portante (60) du module de toit (34) pour former un cadre porteur, le dispositif support (66) présentant des supports (68, 70) agencés dans le sens vertical du véhicule, lesquels sont reliés entre eux au moyen d'une traverse (54) s'étendant à la hauteur d'un plancher de voiture (14).

2. Carrosserie selon la revendication 1, **caractérisée en ce que**, la plaque portante (60) est délimitée sur l'extrémité avant et l'extrémité arrière par respectivement une traverse (62, 64).

3. Carrosserie selon la revendication 1, **caractérisée en ce que**, les supports (68, 70) agencés dans le sens vertical du véhicule, du dispositif support (66) sont disposés sur le côté intiérieur de passages de roue (20) arrière.

4. Carrosserie selon la revendication 1, **caractérisée en ce que**, les supports (68, 70) agencés dans le sens vertical du véhicule sont reliés directement à la traverse (62) avant de la plaque portante (60).

5. Carrosserie selon la revendication 1, **caractérisée en ce que**, la plaque portante (60) est disposée sur l'extrémité (59) inférieure des montants de toit (42) entre des parties supérieures de paroi latérale du module de toit (34).

6. Carrosserie selon la revendication 1, **caractérisée en ce que**, le module de toit (34) se termine directement derrière la plaque portante (60) le long d'un plan de séparation vertical, un module arrière (44) se raccordant au module de toit (34).
